# EUROPÄISCHE PATENTSCHRIFT

(11) **EP 1 824 890 B1**
(45) Veröffentlichungstag und Bekanntmachung des Hinweises auf die Patenterteilung: **25.03.2009**
(21) Anmeldenummer: 05808243.9
(22) Anmeldetag: 03.11.2005
(51) Int. Cl.: C08F 8/28, C08F 16/38, C08L 29/14, C09D 11/10, C09D 129/14, C23F 11/173, C04B 35/634, B22F 1/00, G03F 7/021, G03C 1/053, G03C 1/498

(54) **Verfahren zur Herstellung von niedrig scherverdünnenden Polyvinylacetalen**
Process for preparing poly(vinylacetal)s with a low structural viscosity
Procédé de préparation d'acétals de polyvinyle ayant une faible viscosité structurelle

(30) Priorität: 11.11.2004 DE 102004054569
(43) Veröffentlichungstag der Anmeldung: 29.08.2007
(73) Patentinhaber: Kuraray Europe GmbH, 65926 Frankfurt am Main (DE)
(72) Erfinder: STARK, Kurt, 91284 Neuhaus (DE)
(74) Vertreter: Kisters, Michael Marcus
(86) Internationale Anmeldenummer: PCT/EP2005/011771
(87) Internationale Veröffentlichungsnummer: WO 2006/050853

(56) Entgegenhaltungen:
- EP-A- 0 594 026
- WO-A-20/06002832
- DE-A1- 2 365 005
- RUTTENS, FRANK: "Polyvinyl butyral, more than just a binder" JOURNAL OF IMAGING SCIENCE AND TECHNOLOGY , 43(6), 535-539 CODEN: JIMTE6; ISSN: 1062-3701, 1999, XP001112825

## Beschreibung

Die Erfindung betrifft Verfahren zur Herstellung von niedrig scherverdünnenden Polyvinylacetalen sowie deren Verwendung.

Die Herstellung von Polyvinylacetalen, die aus den entsprechenden Polyvinylalkoholen durch polymeranaloge Umsetzung mit den entsprechenden Aldehyden erhalten werden, ist bereits seit 1924 bekannt, wobei in der Folgezeit eine Vielzahl von Aldehyden zur Herstellung der entsprechenden Polyvinylacetale eingesetzt worden sind. Polyvinylacetale werden in einem 3-Stufenprozeß (Polyvinylacetat -> Polyvinylalkohol -> Polyvinylacetal) hergestellt, wobei Produkte resultieren, welche neben Vinylacetalgruppen noch Vinylalkohol- und Vinylacetat-Einheiten enthalten. Kommerzielle Bedeutung haben vor allem Polyvinylformal, Polyvinylacetacetal und Polyvinylbutyral (PVB) erlangt.

Unter anderem aufgrund ihrer guten Pigment-Bindekraft werden Polyvinylbutyrale auch als Bindemittel in Lacken und speziell in Druckfarben eingesetzt. In dieser Anwendung wird die Anforderung gestellt, dass die organischen Lösungen der Polyvinylacetale auch bei hoher Scherbelastung, das heißt auch bei schnelllaufenden Druckmaschinen, möglichst konstante Lösungsviskosität zeigen. Es wird Newtonsches Verhalten unabhängig von der angelegten Scherrate gefordert.

Die EP 535643 A1 betrifft ein Verfahren zur Herstellung von Polyvinylacetalen mit verbesserter Schmelzviskosität mittels Acetalisierung von Vinylalkohol-Mischpolymerisaten mit einem Anteil an mehrfach ethylenisch ungesättigten Comonomeren. Zur Acetalisierung werden Polyvinylalkohol und Aldehyd vorgelegt und die Säure kontinuierlich zudosiert. Aus der JP-A 2001-288215 ist ein Verfahren zur Herstellung von Polyvinylacetal-Harzen bekannt, bei welchem Polyvinylalkohol und Aldehyd jeweils teilweise vorgelegt werden, und die restlichen Anteile jeweils nach Abkühlen der Reaktionsmischung portionsweise zu dosiert werden. In der JP-A 2000-159831 wird zur Herstellung von Polyvinylacetal der Hauptanteil des Polyvinylalkohols vorgelegt, Säurekatalysator und Aldehyd zugegeben und der Rest an Polyvinylalkohol zudosiert. In dem Verfahren der JP-A 10-158328 wird die Acetalisierung mittels Zugabe von bereits acetalisiertem Polyvinylalkohol optimiert. Die WO 03/066690 betrifft ein Verfahren zur Herstellung von Polyvinylacetalen mit niederen Metallanteilen, wobei die Acetalisierung von Polyvinylalkohol in zwei hintereinandergeschalteten Reaktoren erfolgt.

Es bestand die Aufgabe, Verfahren zur Herstellung von Polyvinylacetalen zur Verfügung zu stellen, welche insbesondere in organischen Lösungsmitteln, unabhängig von der Polymerzusammensetzung und Konzentration, bei hoher Scherbelastung niedrige Scherverdünnung zeigen, das heißt nahezu konstante Lösungsviskosität bzw. Newtonsches Rheologieverhalten in organischen Lösungsmitteln unabhängig von der Scherrate aufweisen.

In J. Imag. Sci. Technol. 43, 535 (1999) werden Polyvinylacetal-Lösungen in Methylethylketon untersucht, deren Lösungsviskositäten sich in einem Scherratenbereich von 1 bis 100 s-1 drastisch verändern. In der DE-OS 2365005 wird ein Verfahren zur Herstellung von Polyvinylacetalen beschrieben, bei welchem die Acetalisierung in zwei Temperaturbereichen durchgeführt wird und der Aldehydanteil jeweils nicht kontinuierlich zudosiert wird, sondern stoßweise zugegeben wird. In der EP 594026 A2 wird ein Verfahren zur Herstellung von Polyvinylacetal-Dispersionen beschrieben, bei dem der Aldehydanteil über mehrere Stunden kontinuierlich zudosiert wird.

Gegenstand der Erfindung ist ein Verfahren zur Herstellung von niedrig scherverdünnenden Polyvinylacetalen, deren Lösungsviskosität, gemessen mit einem Kegel-Platte-Meßsystem, bei 20°C in 30 Gew.-%-iger Lösung in Methylethylketon sich in einem Scherratenbereich von 1 bis 100 s⁻¹ um maximal 10 % verändert, durch Acetalisierung von teilverseiften oder vollverseiften Vinylester-Polymerisaten mit ≥ 50 Mol-% Vinylalkohol-Einheiten und einer Viskosität von 1 bis 30 mPas (DIN 53015, Methode nach Höppler; 4 %-ige Lösung in Wasser) mit einem oder mehreren Aldehyden, gegebenenfalls in Form deren Hydrate, Halb- oder Vollacetale, in Gegenwart von sauren Katalysatoren, dadurch gekennzeichnet, dass der Aldehydanteil zu 0,1 bis 60 Gew.-%, bezogen auf die gesamte Aldehydmenge, innerhalb der ersten ein bis zehn Minuten der Acetalisierung vorgelegt und innerhalb von 1 bis 30 Minuten vorreagiert wird, und der Restanteil anschließend innerhalb von mindestens 20 Minuten kontinuierlich zudosiert wird.

Geeignete teilverseifte oder vollverseifte Vinylester-Polymerisate leiten sich von Polymerisaten ab, welche 50 bis 100 Mol-% Vinylester-Einheiteh enthalten. Geeignete Vinylester sind Vinylester von unverzweigten oder verzweigten Carbonsäuren mit 1 bis 15 C-Atomen. Bevorzugte Vinylester sind Vinylacetat, Vinylpropionat, Vinylbutyrat, Vinyl-2-ethylhexanoat, Vinyllaurat, 1-Methylvinylacetat (Isopropenylacetat), Vinylpivalat und Vinylester von α-verzweigten Monocarbonsäuren mit 5 bis 11 C-Atomen, beispielsweise VeoVa9® oder VeoVa10® (Handelsnamen der Firma Shell). Besonders bevorzugt ist Vinylacetat.

Neben den Vinylester-Einheiten können gegebenenfalls noch ein oder mehreren Monomere aus der Gruppe umfassend Methacrylsäureester und Acrylsäureester von Alkoholen mit 1 bis 15 C-Atomen, Olefine, Diene, Vinylaromaten und Vinylhalogenide copolymerisiert sein. Geeignete Monomere aus der Gruppe der Ester der Acrylsäure oder Methacrylsäure sind Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-, iso- und t-Butylacrylat, n-, iso- und t-Butylmethacrylat, 2-Ethylhexylacrylat, Norbornylacrylat. Besonders bevorzugt sind Methylacrylat, Methylmethacrylat, n-, iso- und t-Butylacrylat, 2-Ethylhexylacrylat und Norbornylacrylat. Geeignete Diene sind 1,3-Butadien und Isopren. Beispiele für polymerisierbare Olefine sind Ethen und Propen. Als Vinylaromaten können Styrol und Vinyltoluol einpolymerisiert werden. Aus der Gruppe der Vinylhalogenide werden üblicherweise Vinylchlorid, Vinylidenchlorid oder Vinylfluorid, vorzugsweise Vinylchlorid, eingesetzt. Der Anteil dieser Comonomere wird so bemessen, dass der Anteil an Vinylestermonomer ≥ 50 Mol-% im Vinylester-Polymerisat beträgt.

Gegebenenfalls können noch weitere Comonomere in einem Anteil von vorzugsweise 0.02 bis 20 Gew.-%, bezogen auf das Gesamtgewicht des Vinylester-Polymerisats enthalten sein. Beispiele für solche Comonomere sind ethylenisch ungesättigte Mono- und Dicarbonsäuren, vorzugsweise Crotonsäure, Itaconsäure, Fumarsäure und Maleinsäure; weitere ethylenisch ungesättigte Carbonsäureamide und -nitrile, vorzugsweise N-Vinylformamid; auch cyclische Amide, die am Stickstoff eine ungesättigte Gruppe tragen, wie N-Vinylpyrrolidon; Mono- und Diester der Fumarsäure und Maleinsäure wie die Diethyl-, und Diisopropylester sowie Maleinsäureanhydrid, ethylenisch ungesättigte Sulfonsäuren bzw. deren Salze, vorzugsweise Vinylsulfonsäure. Als Comonomere geeignet sind auch kationische Monomere wie Diallyldimethylammoniumchlorid (DADMAC), 3-Trimethylammoniumpropyl(meth)acrylamidchlorid (MAPTAC) und 2-Trimethylammoniumethyl(meth)acrylatchlorid. Ferner sind als Hilfsmonomere geeignet Vinylether und Vinylketone.

Geeignete Comonomere sind auch polymerisierbare Silane bzw. Merkaptosilane. Bevorzugt sind γ-Acryl- bzw. γ-Methacryloxypropyltri(alkoxy)silane, α-Methacryloxymethyltri(alkoxy)silane, γ-Methacryloxypropylmethyldi(alkoxy)silane, Vinylalkyldi(alkoxy)silane und Vinyltri(alkoxy)silane, wobei als Alkoxygruppen beispielsweise Methoxy-, Ethoxy-, Methoxyethylen, Ethoxyethylen-, Methoxypropylenglykolether- bzw. Ethoxypropylenglykolether-Reste eingesetzt werden können. Beispiele hierfür sind Vinyltrimethoxysilan, Vinyltriethoxysilan, Vinyltripropoxysilan, Vinyltriisopropoxysilan, Vinyltris-(1-methoxy)-isopropoxysilan, Vinyltributoxysilan, Vinyltriacetoxysilan, 3-Methacryloxypropyltrimethoxysilan, 3-Methacryloxypropylmethyldimethoxysilan, Methacryloxymethyltrimethoxysilan, 3-Methacryloxypropyl-tris(2-methoxyethoxy)silan, Vinyltrichorsilan, Vinylmethyldichlorsilan, Vinyltris-(2-methoxyethoxy)silan, Trisacetoxyvinylsilan, 3-(Triethoxysilyl)propylbernsteinsäureanhydridsilan. Bevorzugt werden auch 3-Mercaptopropyltriethoxysilan, 3-Mercaptopropyltrimethoxysilan und 3-Mercaptopropylmethyldimethoxysilan.

Weitere Beispiele sind vorvernetzende Comonomere wie mehrfach ethylenisch ungesättigte Comonomere, beispielsweise Divinyladipat, Diallylmaleat, Allylmethacrylat, Butandioldiacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats.

Diese Vinylester-Polymerisate sind im Handel erhältlich oder können in bekannter Weise mittels Polymerisation hergestellt werden; vorzugsweise durch Substanzpolymerisation, Suspensionspolymerisation oder durch Polymerisation in organischen Lösungsmitteln, besonders bevorzugt in alkoholischer Lösung. Geeignete Lösungsmittel und Regler sind beispielsweise Methanol, Ethanol, Propanol, Isopropanol. Die Polymerisation wird unter Rückfluß bei einer Temperatur von 40°C bis 100°C durchgeführt und durch Zugabe gängiger Initiatoren radikalisch initiiert. Beispiele für gängige Initiatoren sind Percarbonate wie Cyclohexylperoxidicarbonat, Azoinitiatoren oder Perester wie t-Butylperneodecanoat oder t-Butylperpivalat. Die Einstellung des Molekulargewichts kann in bekannter Weise durch Zugabe von Regler, durch den Lösungsmittelgehalt, durch Variation der Initiatorkonzentration und durch Variation der Temperatur erfolgen. Nach Abschluß der Polymerisation wird das Lösungsmittel sowie gegebenenfalls überschüssiges Monomer und Regler abdestilliert.

Die Verseifung der Vinylester-Polymerisate erfolgt in an sich bekannter Weise, zum Beispiel nach dem Band- oder Kneterverfahren, im Alkalischen oder Sauren unter Zugabe von Säure oder Base. Vorzugsweise wird das Vinylester-Festharz in Alkohol, beispielweise Methanol, unter Einstellen eines Feststoffgehalts von 15 bis 70 Gew.-% aufgenommen. Bevorzugt wird die Hydrolyse im Basischen durchgeführt, beispielsweise durch Zugabe von NaOH, KOH oder NaOCH₃. Die Base wird im allgemeinen in einer Menge von 1 bis 5 Mol-% pro Mol Ester-Einheiten eingesetzt. Die Hydrolyse wird bei Temperaturen von 20°C bis 70°C durchgeführt. Nach Abschluß der Hydrolyse wird das Lösungsmittel abdestilliert und der Polyvinylalkohol wird als Pulver erhalten. Der Polyvinylalkohol kann aber auch durch eine sukzessive Zugabe von Wasser, während das Lösungsmittel abdestilliert wird, als wässrige Lösung gewonnen werden.

Als vollverseifte Vinylester-Polymerisate bezeichnet man dabei solche Polymerisate, deren Hydrolysegrad > 96 Mol-% ist. Als teilverseifte Polyvinylester sind solche zu verstehen, mit einem Hydrolysegrad ≥ 50 Mol-% und ≤ 96 Mol-%. Die teil- oder vollverseiften Vinylesterpolymerisate haben vorzugsweise einen Hydrolysegrad von 50 Mol-% bis 99.9 Mol-%, besonders bevorzugt von 70 Mol-% bis 99.9 Mol-%, am meisten bevorzugt von 90 Mol-% bis 99.9 Mol-%. Die Viskosität des Polyvinylalkohols (DIN 53015, Methode nach Höppler; 4 %-ige Lösung in Wasser) beträgt 1 bis 30 mPas, vorzugsweise 1 bis 10 mPas, und dient als Maß für das Molekulargewicht und für den Polymerisationsgrad der teil- oder vollverseiften Vinylesterpolymerisate. Der Polymerisationsgrad des eingesetzten Polyvinylalkohols ist mindestens 130.

Bevorzugte Aldehyde sind aliphatische und aromatische Aldehyde mit 1 bis 15 C-Atomen sowie deren Gemische. Besonders bevorzugte Aldehyde aus der Gruppe der aliphatischen Aldehyde mit 1 bis 15 C-Atomen sind Formaldehyd, Acetaldehyd, Propionaldehyd und am meisten bevorzugt Butyraldehyd, oder eine Mischung aus Butyraldehyd und Acetaldehyd. Als aromatische Aldehyde können beispielsweise Benzaldehyd oder dessen Derivate verwendet werden. Die Aldehyde können dabei auch in der Form deren Halb- bzw. Vollacetale bzw. deren Aldehyd-Hydrate eingesetzt werden. Die Zugabemenge an Aldehyd richtet sich dabei nach dem erwünschten Acetalisierungsgrad. Da die Acetalisierung mit fast vollständigem Umsatz abläuft, kann die Zugabemenge durch einfache stöchiometrische Rechnung bestimmt werden.

Zur Acetalisierung werden die teil- oder vollverseiften Polyvinylester vorzugsweise in wässrigem Medium aufgenommen. Üblicherweise wird ein Festgehalt der wässrigen Lösung von 5 bis 30 Gew.-% eingestellt. Die Acetalisierung erfolgt in Gegenwart von sauren Katalysatoren wie Salzsäure, Schwefelsäure, Salpetersäure oder Phosphorsäure. In einer bevorzugten Ausführungsform wird durch Zugabe von 20 %-iger Salzsäure oder 35 %-iger Salpetersäure der pH-Wert der Lösung zunächst auf Werte ≤ 5, anschließend auf Werte ≤ 1 eingestellt.

Nach Zugabe des Katalysators wird die Lösung auf vorzugsweise -10°C bis +30°C abgekühlt. Dabei gilt: Je niedriger das Molekulargewicht des eingesetzten modifizierten Polyvinylalkohols, umso geringer wird die Fälltemperatur gewählt. Die Acetalisierungsreaktion wird durch Zugabe des Aldehyd, bzw. dessen Halb- oder Vollacetal gestartet.

Die Aldehyd- bzw. Halbacetal- oder Vollacetal-Komponente wird zu 0.1 bis 60 Gew.-%, besonders bevorzugt 1 bis 50 Gew.-%, am meisten bevorzugt 3 bis 30 Gew.-%, jeweils bezogen auf die Gesamtmenge von Aldehyd bzw. Hydrat, Halb- oder Vollacetal, innerhalb der ersten ein bis zehn Minuten der Acetalisierung vorgelegt und innerhalb von 1 bis 30 Minuten vorreagiert, wobei ein pH-Wert von 0 bis 5 eingestellt wird. Bevorzugt beträgt das Zeitfenster für die Zugabe der Aldehyd-Vorlage ein bis 5 Minuten. Der Restanteil wird anschließend kontinuierlich innerhalb von mindestens 20 Minuten zudosiert, wobei sich ein pH-Wert < 1 empfiehlt. Vorzugsweise geschieht dies über einen Zeitraum von 20 bis 120 Minuten.

Die Acetalisierung wird nach Abschluß der Zugabe des Aldehyds durch Erwärmen des Ansatzes auf 20°C bis 60°C und mehrstündiges Rühren, vorzugsweise 1 bis 6 Stunden vervollständigt, und das pulverförmige Reaktionsprodukt durch Filtration und nachgeschaltetem Waschschritt isoliert. Zur Stabilisierung können ferner Alkalien zugesetzt werden. Während der Fällung und der Nachbehandlung kann mit Emulgatoren gearbeitet werden, um die wäßrige Suspension des Polyvinylacetals zu stabilisieren.

In einem besonders bevorzugten Verfahren werden zunächst zu der wässrigen Lösung des Polyvinylalkohols ein oder mehrere Aldehyde bzw. deren Hydrate, Halb- oder Vollacetale zugesetzt, bevorzugt oberhalb der Fälltemperatur. Die Aldehydmenge beträgt 0.1 bis 60 Gew.-%, vorzugsweise 1 bis 50 Gew.-%, besonders bevorzugt 3 bis 30 Gew.-%, jeweils bezogen auf die Gesamtmenge von Aldehyd bzw. dessen Hydrat, Halb- oder Vollacetal. Mit Katalysator, beispielsweise Salzsäure oder Salpetersäure, wird auf einen pH-Wert von 0 bis 5 eingestellt, so dass die Aldehyde längere Zeit (bis zu 30 Minuten) mit dem Polyvinylalkohol vorreagieren können. Anschließend wird bei der Fälltemperatur durch Zugabe der restlichen Aldehydmenge, die innerhalb von mindestens 20 Minuten zudosiert wird, die Fällung des Polyvinylacetals vorgenommen. Zur Fällung kann gegebenfalls weiterer Katalysator zugegeben werden, so dass der pH-Wert bevorzugt ≤ 1 ist. Es schließt sich das oben beschriebene Aufarbeitungsverfahren an.

Mit dieser Vorgehensweise werden niedrig scherverdünnende Polyvinylacetale zugänglich. Unter niedrig scherverdünnend ist dabei zu verstehen, dass sich die Lösungsviskosität einer 30 %-igen Lösung des jeweiligen Polyvinylacetals in Methylethylketon, in einem Scherraten-Bereich von 1 bis 100 s⁻¹, nur maximal um 10 % verändert (meist abnimmt = Strukturviskosität bzw. Scherverdünnung). Die Bestimmung der Lösungsviskosität erfolgt in dem Fachmann bekannter Weise mit handelsüblichen Rheometern, beispielsweise mit einem Kegel-Platte-Meßsystem. Es kann beispielsweise die in den Beispielen beschriebene Meßmethode zur Viskositätsmessung angewendet werden.

Die niedrig scherverdünnenden Polyvinylacetale eignen sich insbesondere für die Verwendung als Bindemittel in Druckfarben. Geeignete Druckfarbenformulierungen sind dem Fachmann bekannt und enthalten im allgemeinen 5 bis 50 Gew.-% Pigmentanteil, beispielsweise Disazo- oder Phthalocyanin-Pigmente, 4 bis 25 Gew.-% Polyvinylacetal-Bindemittel und Lösungsmittel, beispielsweise Alkohole wie Ethanol oder Ester wie Ethylacetat. Gegebenenfalls können noch weitere Zusatzstoffe wie Verzögerer, Haftvermittler, Weichmacher und andere Additive, wie beispielsweise Füllstoffe oder Wachse, enthalten sein.

Auch für Verbundsicherheitsglas und Glasverbunde, Hochsicherheitsglas oder Scheibenfolien sind die niedrig scherverdünnenden Polyvinylacetale sehr gut geeignet.

Die niedrig scherverdünnenden Polyvinylacetale können ferner als Bindemittel in Lacken auf wässriger Basis oder auf Basis von organischen Lösungsmitteln vorteilhafte Verwendung finden, beispielsweise als Bindemittel für die Innenbeschichtung von Dosen. Weitere Einsatzgebiete der niedrig scherverdünnenden Polyvinylacetale sind die Verwendung als Bindemittel in Korrosionsschutzmitteln. Weiter sind die niedrig scherverdünnenden Polyvinylacetale auch als Bindemittel in der Keramikindustrie, speziell als Bindemittel für keramische Grünkörper, geeignet. Zu nennen ist auch der Einsatz als Bindemittel für Keramikpulver und Metallpulver im Spritzguß (powder injection molding).

Die niedrig scherverdünnenden Polyvinylacetale können ferner als Bindemittel für photografische Filme Verwendung finden. Gewinnbringend lassen sie sich insbesondere als Bindemittel für photothermografische Materialien einsetzen.

Die nachfolgenden Beispiele dienen zur weiteren Erläuterung der Erfindung, ohne diese in irgendeiner Weise einzuschränken:

### Beispiel 1:

In einem 6 Liter Glasreaktor wurden 1200 ml dest. Wasser und 2400 ml einer 10.0 %-igen wässrigen Lösung einer Mischung zweier vollverseifter, im Handel erhältlicher Polyvinylalkohole (Mischung Clariant Mowiol 4-98 (20 %) und Clariant Mowiol 6-98 (80 %), Viskosität 5.4 mPas (DIN 53015; Methode nach Höppler; 4 %-ige wässrige Lösung), vorgelegt. Der gemessene pH-Wert dieser Vorlage betrug 5.4. Durch Zugabe von etwas 35 %-iger Salpetersäure wurde ein pH-Wert von 4.2 eingestellt. Nun wurde unter Rühren auf 10°C abgekühlt, und bei dieser Temperatur wurden innerhalb von 5 min 21.7 g Butyraldehyd zugegeben. Der Butyraldehyd wurde 10 min bei 10°C mit der Polyvinylalkohol-Mischung vorreagiert, wodurch eine effektive Anknüpfung stattfand. Anschließend wurde auf 2.7°C abgekühlt und es wurden 500 ml 35 %-ige Salpetersäure zugegeben. Die Innentemperatur stieg dabei auf 7°C an. Nach weiterem Abkühlen auf 1°C (Fälltemperatur) wurden anschließend, innerhalb eines Zeitraumes von 40 Minuten, 194.8 g Butyraldehyd zudosiert. Dabei fiel das Polyvinylbutyral aus. Nach weiteren 40 Minuten Reaktionszeit bei 1°C wurde die Temperatur über einen Zeitraum von 3.5 Stunden auf 26°C erhöht und diese Temperatur für weitere 2.5 Stunden gehalten. Daraufhin wurde das Produkt abfiltriert und solange mit destilliertem Wasser gewaschen, bis das Filtrat neutral reagierte. Anschließend erfolgte die Trocknung bis zu einem Festgehalt von mindestens 98 %, zunächst bei 22°C, dann bei 35°C im Vakuum.
Es wurde ein weißes, pulverförmiges Polyvinylbutyral mit 11.8 Gew.-% Vinylalkohol-Einheiten erhalten. Der Vinylacetat-Gehalt lag unter 2.0 Gew.-%.

### Beispiel 2:

Es wurde analog wie in Beispiel 1 vorgegangen. Es wurde allerdings eine Mischung der im Handel erhältlichen Polyvinylalkohole Clariant Mowiol 4-98 (10 %) und Clariant Mowiol 6-98 (90 %), Viskosität 5.6 mPas (DIN 53015; Methode nach Höppler; 4 %-ige wässrige Lösung), verwendet.
Es wurde ein weißes, pulverförmiges Polyvinylbutyral mit 12.2 Gew.-% Vinylalkohol-Einheiten erhalten. Der Vinylacetat-Gehalt lag unter 2.0 Gew.-%.

### Beispiel 3

In einem 6 Liter Glasreaktor wurden 1200 ml dest. Wasser und 2400 ml einer 10.0 %-igen wässrigen Lösung einer Mischung zweier vollverseifter, im Handel erhältlicher Polyvinylalkohole (Mischung Clariant Mowiol 4-98 (30 %) und Clariant Mowiol 6-98 (70 %), Viskosität 5.2 mPas (DIN 53015; Methode nach Höppler; 4 %-ige wässrige Lösung), vorgelegt. Der gemessene pH-Wert dieser Vorlage betrug 5.6. Durch Zugabe von etwas 35 %-iger Salpetersäure wurde ein pH-Wert von 3.5 eingestellt. Nun wurde unter Rühren auf 10°C abgekühlt, und bei dieser Temperatur wurden innerhalb von 5 min 36.9 g Butyraldehyd zugegeben. Der Butyraldehyd wurde 10 min bei 10°C mit der Polyvinylalkohol-Mischung vorreagiert, wodurch eine effektive Anknüpfung stattfand. Anschließend wurde auf 2.7°C abgekühlt und es wurden 500 ml 35 %-ige Salpetersäure zugegeben. Die Innentemperatur stieg dabei auf 7°C an. Nach weiterem Abkühlen auf 1°C (Fälltemperatur) wurden anschließend, innerhalb eines Zeitraumes von 50 Minuten, 147.6 g Butyraldehyd zudosiert. Dabei fiel das Polyvinylbutyral aus. Nach weiteren 40 Minuten Reaktionszeit bei 1°C wurde die Temperatur über einen Zeitraum von 3.5 Stunden auf 26°C erhöht und diese Temperatur für weitere 2.5 Stunden gehalten. Daraufhin wurde das Produkt abfiltriert und solange mit destilliertem Wasser gewaschen, bis das Filtrat neutral reagierte. Anschließend erfolgte die Trocknung bis zu einem Festgehalt von mindestens 98 %, zunächst bei 22°C, dann bei 35°C im Vakuum.
Es wurde ein weißes, pulverförmiges Polyvinylbutyral mit 14.3 Gew.-% Vinylalkohol-Einheiten erhalten. Der Vinylacetat-Gehalt lag unter 2.0 Gew.-%.

### Beispiel 4

In einem 6 Liter Glasreaktor wurden 2715 ml dest. Wasser und 1172 ml einer 20.0 %-igen wässrigen Lösung eines vollverseiften Polyvinylalkohols vom Typ 03/20, Viskosität 3.4 mPas (DIN 53015; Methode nach Höppler; 4 %-ige wässrige Lösung), vorgelegt. Der gemessene pH-Wert dieser Vorlage betrug 5.5. Durch Zugabe von etwas 35 %-iger Salpetersäure wurde ein pH-Wert von 3.5 eingestellt. Nun wurde unter Rühren auf 10°C abgekühlt, und bei dieser Temperatur wurden innerhalb von 5 min 30.1 g Butyraldehyd zugegeben. Der Butyraldehyd wurde 20 min bei 10°C mit dem Polyvinylalkohol vorreagiert, wodurch eine effektive Anknüpfung stattfand. Anschließend wurde auf 2.7°C abgekühlt und es wurden 500 ml 35 %-ige Salpetersäure zugegeben. Die Innentemperatur stieg dabei auf 7°C an. Nach weiterem Abkühlen auf -2°C (Fälltemperatur) wurden anschließend, innerhalb eines Zeitraumes von 35 Minuten, 170.4 g Butyraldehyd zudosiert. Dabei fiel das Polyvinylbutyral aus. Nach weiteren 40 Minuten Reaktionszeit bei -2°C wurde die Temperatur über einen Zeitraum von 3.5 Stunden auf 26°C erhöht und diese Temperatur für weitere 2.5 Stunden gehalten. Daraufhin wurde das Produkt abfiltriert und solange mit destilliertem Wasser gewaschen, bis das Filtrat neutral reagierte. Anschließend erfolgte die Trocknung bis zu einem Festgehalt von mindestens 98 %, zunächst bei 22°C, dann bei 35°C im Vakuum.
Es wurde ein weißes, pulverförmiges Polyvinylbutyral mit 13.2 Gew.-% Vinylalkohol-Einheiten erhalten. Der Vinylacetat-Gehalt lag unter 2.0 Gew.-%. Die Viskosität (10 % in EtOH) belief sich auf 24.1 mPas.

### Beispiel 5

Vorlage wie Beispiel 4, mit dem Unterschied, dass mit 520 ml 35 %-iger Salpetersäure ein pH-Wert von 0 eingestellt wurde. 200.5 g Butyraldehyd wurden bei einer Fälltemperatur von -2°C in einer Zeit von 25 min zu der Vorlage kontinuierlich zugegeben. Dabei fiel das Polyvinylbutyral aus. Die weitere Aufarbeitung erfolgte wie in Beispiel 4.
Es wurde ein weißes, pulverförmiges Polyvinylbutyral mit 14.0 Gew.-% Vinylalkohol-Einheiten erhalten. Der Vinylacetat-Gehalt lag unter 2.0 Gew.-%. Die Viskosität (10 % in EtOH) belief sich auf 24.6 mPas.

### Vergleichsbeispiel 6:

Ein handelsübliches Polyvinylbutyral mit analogem Molekulargewicht und vergleichbarer OH-Zahl (Gew.-% Vinylalkohol-Einheiten) wie beim Polyvinylbutyral aus Beispiel 1.

### Bestimmungsmethoden:

### 1. Bestimmung der dynamischen Viskosität einer Lösung von Polyvinylacetalen:

90.00 ± 0.01 g Ethanol und 10.00 ± 0.01 g Polyvinylacetal wurden in einem 250 ml Erlenmeyerkolben mit Schliffstopfen eingewogen und bei 50°C in der Schüttelmaschine vollständig aufgelöst. Anschließend wurde auf 20°C abgekühlt und die dynamische Viskosität (DIN 53 015; Methode nach Höppler) bei 20°C mit einer geeigneten Kugel, z.B. der Kugel 2 oder 3, bestimmt.

### 2. Bestimmung des Vinylalkohol-Gehalts:

Der Gehalt an Vinylalkohol-Gruppen in den Polyvinylacetalen wurde durch die Acetylierung der Hydroxylgruppen mit Essigsäureanhydrid in Gegenwart von Pyridin und 4-Dimethylaminopyridin ermittelt.
Dazu wurden 1 g ± 0.001 g Polyvinylacetal in 24 ml Pyridin und 0.04 g 4-Dimethylaminopyridin bei 50°C innerhalb von 2 Stunden gelöst. Die auf 25°C abgekühlte Lösung wurde mit 10 ml einer Mischung aus Pyridin und Essigsäureanhydrid (87/13 Volumenteile) versetzt und 1 Stunde intensiv durchmischt. Daraufhin wurden 30 ml einer Mischung aus Pyridin/ Wasser (5/1 Volumenteile) zugesetzt und eine weitere Stunde geschüttelt. Anschließend wurde mit methanolischer 0.5 N KOH auf pH 7 titriert.

### 3. Bestimmung der Viskosität der Polyvinylalkohol-Lösungen:

Die Bestimmung der Viskosität der als Edukte eingesetzten teil- oder vollverseiften Festharze erfolgte analog zur Bestimmung der dynamischen Viskosität der Polyvinylacetale; es wurden nur 4 %-ige wässrige Lösungen eingesetzt.

### Anwendungstechnische Ausprüfung:

### a) Präparation organischer Lösungen mit Polyvinylacetal (30 %-ige Lösung in Methylethylketon):

75 g Polyvinylacetal wurden in 175 g Methylethylketon (MEK) in einem verschließbaren Glasgefäß mit Volumen 500 ml bei 23°C gelöst und mit Hilfe eines Dissolvers (mechanischer Rührer mit 3000 Upm) intensiv mindestens 15 min eingerührt. Anschließend wurde das Gefäß verschlossen und mit einem Magnetrührer weitere 3 h 45 min gerührt. Nach diesen 4 h war das Polyvinylacetal vollständig und homogen in MEK gelöst. Die Lösung wurde dann rheologisch charakterisiert (siehe b)).

### b) Messung der Lösungsviskosität:

Die 30 %-ige Lösung des Polyvinylacetals in MEK (hergestellt nach a) wurde mit einem Bohlin Rheometer CVO 120 HR mit einem Kegel-Platte-Meßsystem (CP 4/40) bei 20°C vermessen. Um Verdunstung zu vermeiden, wurde das Meßsystem mit einer Lösemittelfalle abdedeckt. Zur Messung wurden innerhalb 1.5 min ca. 4 g der Lösung in das Meßsystem gegeben. Nach diesen 1.5 Minuten wurde die Lösung 90 s lang mit einer konstanten Scherrate von 10 s⁻¹ kontinuierlich vorgeschert. Danach wurde 60 s gewartet und anschließend wurde ein voreingestelltes Meßprogramm gestartet, das bei einer Scherrate von 0.3 s⁻¹ beginnt und bei 500 s⁻¹ endet und danach wieder auf eine Scherrate von 0.3 s⁻¹ zurück geht. Innerhalb dieses Scherratenbereichs von 0.3 s⁻¹ bis 500 s⁻¹ wurden für die Viskosität 40 Meßpunkte - wobei dazu die jeweilige entsprechende Scherrate für kurze Zeit konstant gehalten wurde (constant rate-Test) - aufgezeichnet. Ausgewertet wurde die Viskosität bei einer Scherrate von 1 s⁻¹ und 100 s⁻¹.
Tabelle 1 zeigt die Ergebnisse der rheologischen Messung nach b) an 30 %igen Lösungen von Polyvinylacetal in MEK.

**Tabelle 1:**

| Beispiel | η₁[mPas] bei 1 s⁻¹ | η₂[mPas] bei 100 s⁻¹ | η₁ / η₂ | [(η₂-η₁) /η₁] x 100 [%] |
|---|---|---|---|---|
| 1 | 4500 | 4360 | 1.032 | - 3.1 |
| 2 | 5000 | 4790 | 1.044 | - 4.2 |
| 3 | 3430 | 3330 | 1.030 | - 2.9 |
| 4 | 810 | 790 | 1.025 | - 2.5 |
| 5 | 860 | 800 | 1.075 | - 7.0 |
| V6 | 6200 | 4550 | 1.363 | - 26.6 |

Wie der Tabelle zu entnehmen ist, führt das erfindungsgemäße Herstellverfahren zu Polyvinylacetalen, die in Lösung (hier 30 %-ig in MEK) newtonsches Rheologieverhalten zeigen, d.h. die Viskosität dieser Lösungen ist im Scherraten-Bereich 1 bis 100 s⁻¹ nahezu unabhängig von der Scherrate. Dies belegen die Beispiele 1 bis 5, wo sich die Abnahme der Viskosität bei 100 s⁻¹ bezogen auf den Wert bei 1 s⁻¹ nur auf höchstens 7.0 % beläuft, also deutlich im einstelligen Bereich liegt.
Kommerziell erhältliche Polyvinylacetale zeigen dieses Verhalten nicht (V6). Hier beläuft sich die Abnahme der Viskosität bei der Scherrate 100 s⁻¹ bezogen auf den Wert bei der Scherrate 1 s⁻¹ auf weit über 20 %, liegt also deutlich im zweistelligen Bereich.

Ein weiterer Vorteil des erfindungsgemäßen Herstellverfahren liegt darin, dass Polyvinylacetale erhalten werden, die sich stets absolut klar in organischen Lösungsmitteln lösen. Herkömmliche kommerzielle Produkte zeigen hier hin und wieder eine leichte Trübung.

## Patentansprüche

1. Verfahren zur Herstellung von niedrig scherverdünnenden Polyvinylacetalen, deren Lösungsviskosität, gemessen mit einem Kegel-Platte-Messsystem, bei 20°C in 30 Gew.-%-iger Lösung in Methylethylketon sich in einem Scherratenbereich von 1 bis 100 s⁻¹ um maximal 10 % verändert, durch Acetalisierung von teilverseiften oder vollverseiften Vinylester-Polymerisaten mit ≥ 50 Mol-% Vinylalkohol-Einheiten und einer Viskosität von 1 bis 30 mPas (DIN 53015, Methode nach Höppler; 4 %-ige Lösung in Wasser) mit einem oder mehreren Aldehyden, gegebenenfalls in Form deren Hydrate, Halb- oder Vollacetale, in Gegenwart von sauren Katalysatoren, **dadurch gekennzeichnet, dass** der Aldehydanteil zu 0,1 bis 60 Gew.-%, bezogen auf die gesamte Aldehydmenge, innerhalb der ersten ein bis zehn Minuten der Acetalisierung vorgelegt und innerhalb von 1 bis 30 Minuten vorreagiert wird, und der Restanteil anschließend innerhalb von mindestens 20 Minuten kontinuierlich zudosiert wird.

2. Verfahren zur Herstellung von niedrig scherverdünnenden Polyvinylacetalen nach Anspruch 1, **dadurch gekennzeichnet, dass** mit einem oder mehreren Aldehyden aus der Gruppe umfassend aliphatische und aromatische Aldehyde mit 1 bis 15 C-Atomen acetalisiert wird.

3. Verfahren zur Herstellung von niedrig scherverdünnenden Polyvinylacetalen nach Anspruch 1 bis 2, **dadurch gekennzeichnet, dass** der Aldehydanteil innerhalb der ersten ein bis 5 Minuten der Acetalisierung vorgelegt wird.

4. Verwendung der Verfahrensprodukte gemäß Anspruch 1 bis 3 als Bindemittel in Druckfarben.

5. Verwendung der Verfahrensprodukte gemäß Anspruch 1 bis 3 als Bindemittel in Lacken und Korrosionsschutzmitteln.

6. Verwendung der Verfahrensprodukte gemäß Anspruch 1 bis 3 als Bindemittel für keramische Grünkörper, Keramikpulver und Metallpulver.

7. Verwendung der Verfahrensprodukte gemäß Anspruch 1 bis 3 als Bindemittel für photographische Filme.

8. Verwendung der Verfahrensprodukte gemäß Anspruch 1 bis 3 als Bindemittel für photothermografische Materialien.

## Claims

1. Process for the preparation of low shear-thinning polyvinyl acetals, the solution viscosity thereof, measured using a cone-and-plate measuring system, at 20°C in 30% strength by weight solution in methyl ethyl ketone changes by not more than 10% in a shear rate range from 1 to 100 s⁻¹, by acetalation of partly hydrolyzed or completely hydrolyzed vinyl ester polymers comprising ≥ 50 mol% of vinyl alcohol units and having a viscosity of from 1 to 30 mPas (DIN 53015, method according to Höppler; 4% strength solution in water) with one or more aldehydes, optionally in the form of the hydrates, hemiacetals or full acetals thereof, in the presence of acidic catalysts, **characterized in that** from 0.1 to 60% by weight of the aldehyde, based on the total amount of aldehyde, is initially introduced in the course of the first one to ten minutes of the acetalation and is prereacted in the course of from 1 to 30 minutes, and the remaining proportion is then metered in continuously in the course of at least 20 minutes.

2. Process for the preparation of low shear-thinning polyvinyl acetals according to claim 1, **characterized in that** acetalation is effected with one or more aldehydes from the group consisting of aliphatic and aromatic aldehydes having 1 to 15 carbon atoms.

3. Process for the preparation of low shear-thinning polyvinyl acetals according to claim 1 or 2, **characterized in that** the proportion of aldehyde is initially introduced in the course of the first one to 5 minutes of the acetalation.

4. Use of the process products according to any of claims 1 to 3 as binders in printing inks.

5. Use of the process products according to any of claims 1 to 3 as binders in coatings and corrosion inhibitors.

6. Use of the process products according to any of claims 1 to 3 as binders for ceramic green compacts, ceramic powders and metal powders.

7. Use of the process products according to any of claims 1 to 3 as binders for photographic films.

8. Use of the process products according to any of claims 1 to 3 as binders for photothermographic materials.

## Revendications

1. Procédé de fabrication d'acétals de polyvinyle qui se fluidifient faiblement par cisaillement, dont la viscosité en solution, mesurée avec un système de mesure à cône et plan, à 20 °C dans une solution à 30 % en poids dans de la méthyléthylcétone, change d'un maximum de 10 % dans une plage de taux de cisaillement de 1 à 100 s⁻¹, par acétalisation de polymères d'ester de vinyle partiellement saponifiés ou totalement saponifiés qui comportent ≥ 50 % en moles d'unités alcool vinylique et présentent une viscosité de 1 à 30 mPas (DIN 53015, procédé selon Hôppler ; solution à 4 % dans de l'eau) avec un ou plusieurs aldéhydes, éventuellement sous la forme de leurs hydrates, hémiacétals ou acétals, en présence de catalyseurs acides, **caractérisé en ce qu'**une proportion d'aldéhyde de 0,1 à 60 % en poids, par rapport à la quantité totale d'aldéhyde, est chargée dans les une à dix premières minutes de l'acétalisation et mise en réaction en 1 à 30 minutes, et la proportion résiduelle est ensuite introduite en continu en au moins 20 minutes.

2. Procédé de fabrication d'acétals de polyvinyle qui se fluidifient faiblement par cisaillement selon la revendication 1, **caractérisé en ce que** l'acétalisation a lieu avec un ou plusieurs aldéhydes du groupe comprenant les aldéhydes aliphatiques et aromatiques ayant 1 à 15 atomes C.

3. Procédé de fabrication d'acétals de polyvinyle qui se fluidifient faiblement par cisaillement selon les revendications 1 à 2, **caractérisé en ce que** la proportion d'aldéhyde est chargée dans les une à 5 premières minutes de l'acétalisation.

4. Utilisation des produits du procédé selon les revendications 1 à 3 en tant que liants dans des encres d'impression.

5. Utilisation des produits du procédé selon les revendications 1 à 3 en tant que liants dans des peintures et des agents anti-corrosion.

6. Utilisation des produits du procédé selon les revendications 1 à 3 en tant que liants pour des corps verts céramiques, des poudres céramiques et des poudres métalliques.

7. Utilisation des produits du procédé selon les revendications 1 à 3 en tant que liants pour des films photographiques.

8. Utilisation des produits du procédé selon les revendications 1 à 3 en tant que liants pour des matériaux photothermographiques.
